# EUROPEAN PATENT APPLICATION

(11) **EP 4 192 181 A1**
(43) Date of publication of application: **07.06.2023**
(21) Application number: 21849737.8
(22) Date of filing: 22.01.2021
(51) Int. Cl.: H04W 74/08

(54) **SERVICE ACCESS METHOD, APPARATUS AND SYSTEM**

(30) Priority: 31.07.2020 CN 202010761972
(71) Applicant: ZTE Corporation, Shenzhen, Guangdong 518057 (CN)
(72) Inventor: LU, Liuming, Shenzhen, Guangdong 518057 (CN); YUAN, Liquan, Shenzhen, Guangdong 518057 (CN)
(74) Representative: Novagraaf Technologies
(86) International application number: PCT/CN2021/073375
(87) International publication number: WO 2022/021819

(57) **Abstract**

Provided in embodiments of the present disclosure are a service access method, apparatus and system. The service access method includes: obtaining a low-latency service access request or low-latency service access information of a station; and entering a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

## Description

### Technical Field

Embodiments of the present disclosure relate to the field of communications, and in particular to a service access method, apparatus and system.

### Background

Due to use of a contention-based channel access method, a current enhanced distributed channel access (EDCA) mechanism for wireless fidelity (WIFI) cannot strictly ensure satisfaction of transmission requirements of low-latency services, especially in a case of access of a large number of users. A hybrid coordination function (HCF) controlled channel access (HCCA) has introduced a contention-free channel access mode to achieve data transmission scheduling controllable to a certain extent, however, once data transmission is disturbed in a working frequency band, reliability and robustness of the HCCA are greatly reduced, and the HCCA is rarely applied.

### Summary

The embodiments of the present disclosure provide a service access method, apparatus and system.

According to some embodiments of the present disclosure, a service access method is provided. The service access method is applied to an access point, and includes: obtaining a low-latency service access request or low-latency service access information of a station; and entering a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

According to some embodiments of the present disclosure, a service access method is provided. The service access method includes: receiving low-latency service access operation mode configuration information, wherein the low-latency service is a service satisfying a preset low-latency service condition; and entering a low-latency service access operation mode, wherein at least one first contention period is configured in the low-latency service access operation mode, and the first contention period is dedicated for data of a low-latency service, that is permitted to access an access point, of the station to participate in channel contention for channel access.

According to some embodiments of the present disclosure, a service access apparatus is provided. The service access apparatus includes: a first obtaining module, configured to obtain a low-latency service access request or low-latency service access information of a station; and an entry module, configured to enter a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

According to some embodiments of the present disclosure, a service access apparatus is provided. The service access apparatus includes: a reception module, configured to receive low-latency service access operation mode configuration information, wherein a low-latency service is a service satisfying a preset low-latency service condition; and an entry module, configured to enter a low-latency service access operation mode, wherein at least one first contention period is configured in the low-latency service access operation mode, and the first contention period is dedicated for data of a low-latency service, that is permitted to access an access point, of the station to participate in channel contention for channel access.

According to some embodiments of the present disclosure, a service access system is provided. The service access system includes: an access point and a station, where the station sends a low-latency service access request or low-latency service access information to the access point; and the access point receives the low-latency service access request or the low-latency service access information sent by the station, and enters a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

According to some embodiments of the present disclosure, a computer-readable storage medium is further provided. The computer-readable storage medium stores a computer program, where the computer program is configured to execute the operations of any one of the above method embodiments.

According to some embodiments of the present disclosure, an electronic device is further provided. The electronic device includes a memory and a processor, where a computer program is stored in the memory, and the processor is configured to run the computer program, so as to execute the operations of any one of the above method embodiments.

### Brief Description of the Drawings

Fig. 1 is a structural block diagram of hardware of a station of a service access method according to some embodiments of the present disclosure;
Fig. 2 is a flow chart of a service access method according to some embodiments of the present disclosure;
Fig. 3 is a flow chart of another service access method according to some embodiments of the present disclosure;
Fig. 4 is a structural block diagram of a service access apparatus according to some embodiments of the present disclosure;
Fig. 5 is a structural block diagram of another service access apparatus according to some embodiments of the present disclosure;
Fig. 6 is a schematic diagram of division of special contention periods (SCPs) and normal contention period (NCPs) according to some exemplary implementations of the present disclosure;
Fig. 7 is a schematic diagram of a format of a low-latency mode element according to some exemplary implementations of the present disclosure;
Fig. 8 is a schematic diagram of a format of parameters of a low-latency mode element according to some exemplary implementations of the present disclosure;
Fig. 9 is a schematic diagram of transmission opportunity (TXOP) reservation based period setup of a low-latency service access operation mode according to some exemplary implementations of the present disclosure;
Fig. 10 is a schematic diagram of an operation mechanism of an SCP according to some exemplary implementations of the present disclosure;
Fig. 11 is a schematic diagram of an operation mechanism I of an NCP according to some exemplary implementations of the present disclosure;
Fig. 12 is a schematic diagram of an operation mechanism II of an NCP according to some exemplary implementations of the present disclosure;
Fig. 13 is a schematic diagram of an operation mechanism III of an NCP according to some exemplary implementations of the present disclosure;
Fig. 14 is a schematic diagram of an operation mechanism I of a low-latency service access operation mode according to some exemplary implementations of the present disclosure; and
Fig. 15 is a schematic diagram of an operation mechanism II of a low-latency service access operation mode according to some exemplary implementations of the present disclosure.

### Detailed Description

Embodiments of the present disclosure will be described in details below with reference to the accompanying drawings in conjunction with embodiments.

It should be noted that terms "first", "second", etc., in the description and claims of the present disclosure and in the above accompanying drawings, are set to distinguish similar objects and not necessarily to describe a particular order or sequential order.

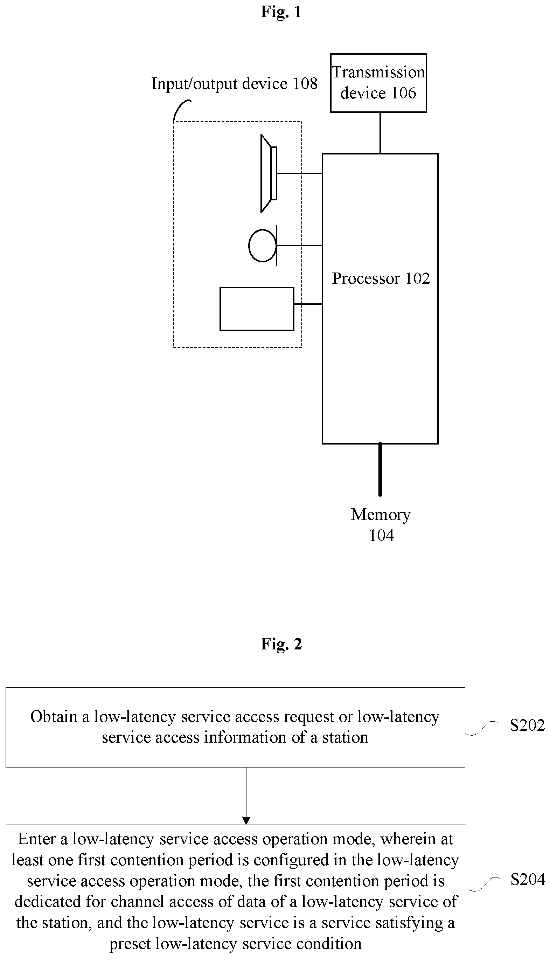

Method embodiments provided in the embodiments of the present disclosure may be executed in a mobile terminal, a computer terminal, an access point (AP), a station (STA) or a similar computing device. With a method running on a station as an example, Fig. 1 is a structural block diagram of hardware of a service access method according to some embodiments of the present disclosure. As shown in Fig. 1, the station may include one or more (only one is shown in Fig. 1) processors 102 (the processor 102 may include, but not limited to, a processing apparatus such as a micro-programmed control unit (MCU) and a field programmable gate array (FPGA)) and a memory 104 configured to store data, where the above station may further include a transmission device 106 having a communication function and an input/output device 108. Those of ordinary skill in the art will appreciate that a structure shown in Fig. 1 is merely schematic and does not pose a limitation on the structure of the above station. For example, the station may further include more or fewer assembly than that shown in Fig. 1, or have a different configuration from that shown in Fig. 1.

The memory 104 may be configured to store a computer program such as a software program and module of application software, for example, a computer program corresponding to the service access method for a service in the embodiment of the present disclosure, and the processor 102 executes various functional applications and data processing by running the computer program stored in the memory 104, that is, the above method is implemented. The memory 104 may include a high-speed random access memory, and may further include a non-volatile memory, for example, one or more magnetic storage apparatuses, a flash memory, or other non-volatile solid-state memories. In some embodiments, the memory 104 may further include a memory remotely arranged relative to the processor 102, where the remote memory may be connected to the station by means of a network. Examples of networks described above include, but not limited to, the Internet, an enterprise intranet, a local area network, a mobile communication network, and combinations thereof.

The transmission apparatus 106 is configured to receive or send data by means of one network. Specific examples of the above network may include a wireless network provided by a communications provider of the station. In an example, the transmission apparatus 106 includes a network interface controller (NIC), which may be connected with other network devices by means of a base station, so as to communicate with the Internet. In one example, the transmission apparatus 106 may be a radio frequency (RF) module, which is configured to wirelessly communicate with the Internet.

It should also be noted that the access point in the embodiments may also adopt the above hardware structure, which will not be repeated.

The embodiments of the present disclosure may run on a network architecture which includes an access point and a station, where the station requests an access service from an access point.

The embodiments provide a service access method, which runs on the access point or the network architecture described above. The service access method is applied to the access point. Fig. 2 is a flow chart of a service access method according to some embodiments of the present disclosure. As shown in Fig. 2, the flow includes operations S202 and S204 which are described in detail below.

At S202, a low-latency service access request or low-latency service access information of a station is obtained.

At S204, a low-latency service access operation mode is entered, wherein at least one first contention period is configured in the low-latency service access operation mode, the first contention period is dedicated for channel access of data of a low-latency service of the station, and the low-latency service is a service satisfying a preset low-latency service condition.

By means of the above operations, since a period dedicated for the low-latency service to participate in contention is specifically configured for the low-latency service, transmission requirements of the low-latency service may be ensured, the problem that transmission requirements of a low-latency service may not be satisfied in the related art is solved, and efficiency of transmission of the low-latency service is improved.

In some exemplary implementations, the low-latency service access request carries at least one of following information: a service quality parameter of the low-latency service in an uplink direction, and a service quality parameter of the low-latency service in a downlink direction.

In some exemplary implementations, the low-latency service access information includes at least one of:
category information of the low-latency service, wherein the category information is used for indicating that a service requesting access is the low-latency service;
access category information of the low-latency service; and
a traffic identifier of the low-latency service.

In some exemplary implementations, entry to the first contention period is indicated by a preset period category identifier.

In some exemplary implementations, the service access method may further include: low-latency service access operation mode configuration information is sent to the station, wherein the low-latency service access operation mode configuration information is used for instructing the station to enter the low-latency service access operation mode.

In some exemplary implementations, the service access method may further include: a beacon is sent, wherein parameter information of the first contention period is indicated in the beacon, and the parameter information includes: the number of at least one first contention period in a beacon interval, start time of each first contention period, and end time of each first contention period.

In some exemplary implementations, the service access method may further include: a transmission opportunity period is obtained, and the transmission opportunity period is determined as the first contention period.

In some exemplary implementations, the service access method may further include: the low-latency service access request of the station is rejected, and the low-latency service access operation mode is not entered.

In some exemplary implementations, at least one second contention period is further configured in the low-latency service access operation mode, where the first contention period and the second contention period are different periods, the second contention period is dedicated for channel access of data of a non-low-latency service of the station, and the non-low-latency service is a service satisfying a preset non-low-latency service condition; or in the second contention period, channel access of data of the low-latency service of the station and data of the non-low-latency service of the station is permitted.

In some exemplary implementations, the number of the at least one first contention period and/or a length of time of the first contention period are/is determined according to a service quality parameter of the low-latency service and a channel environment indicator; and/or the number of the at least one second contention period and/or a length of time of the second contention period are/is determined according to a service quality parameter of the low-latency service and a channel environment indicator.

In some exemplary implementations, the operation of entering the low-latency service access operation mode includes one of:
entering the low-latency service access operation mode according to pre-configured start time of the low-latency service access operation mode; or
entering the low-latency service access operation mode under a condition that a service of the station is the low-latency service; or
receiving management information used for instructing to enter the low-latency service access operation mode, and entering the low-latency service access operation mode in response to the management information; or
receiving an access request sent by the station and used for instructing the access point to enter the low-latency service access operation mode, and entering the low-latency service access operation mode in response to the access request.

The service access method may further include: a category identifier is set for a queue in which data of the low-latency service is located, wherein the category identifier of the queue in which data of the service satisfying the preset low-latency service condition is located is set as a low-latency category identifier.

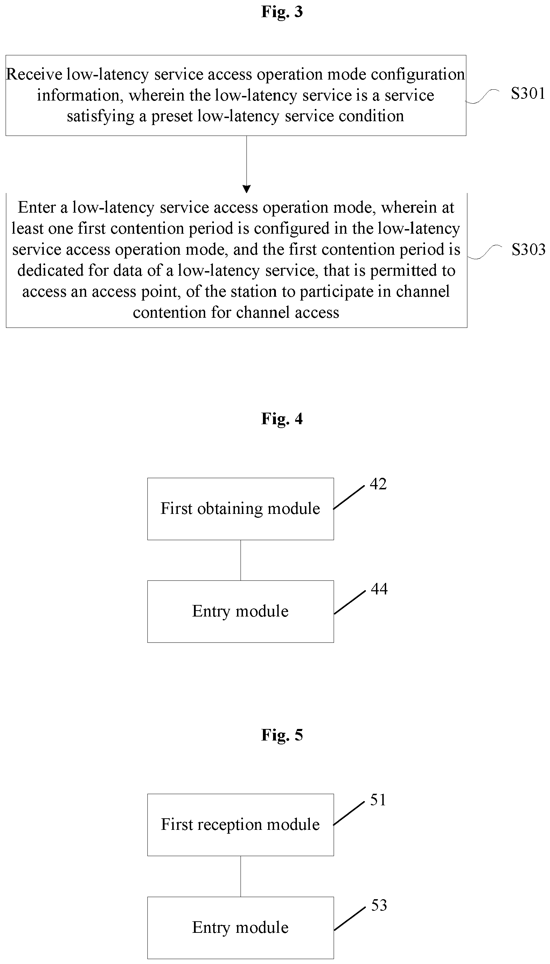

The embodiments also provide a service access method, which runs on a station or a network architecture. Fig. 3 is a flow chart of another service access method according to some embodiments of the present disclosure. As shown in Fig. 3, the flow includes operations S301 and S303 which are described in detail below.

At S301, low-latency service access operation mode configuration information is received, wherein the low-latency service is a service satisfying a preset low-latency service condition.

At S303, a low-latency service access operation mode is entered, wherein at least one first contention period is configured in the low-latency service access operation mode, and the first contention period is dedicated for data of a low-latency service, that is permitted to access an access point, of the station to participate in channel contention for channel access.

By means of the above operations, since a period dedicated for the low-latency service to participate in contention is specifically configured for the low-latency service, transmission requirements of the low-latency service may be ensured, the problem that transmission requirements of a low-latency service may not be satisfied in the related art is solved, and efficiency of transmission of the low-latency service is improved.

In some exemplary implementations, the service access method may further include: a low-latency service access request or low-latency service access information is sent to the access point, wherein the low-latency service access request or the low-latency service access information is used for requesting or instructing the access point to enter the low-latency service access operation mode; and feedback information that is sent by the access point and indicates permission of the channel access of the data of the low-latency service of the station is received.

In some exemplary implementations, at least one second contention period is further configured in the low-latency service access operation mode, where the second contention period is dedicated for channel access of data of a non-low-latency service of the station by the access point, and the non-low-latency service is a service satisfying a preset non-low-latency service condition; or
at least one second contention period is further configured in the low-latency service access operation mode, where in the second contention period, channel access of data of the low-latency service of the station and data of the non-low-latency service of the station is permitted by the access point, and the non-low-latency service is a service satisfying a preset non-low-latency service condition.

In some exemplary implementations, the service access method may further include: a beacon sent by the access point is received, wherein parameter information of the first contention period is indicated in the beacon, and the parameter information includes: the number of at least one first contention period in a beacon interval, start time of each first contention period, and end time of each first contention period.

In some exemplary implementations, the low-latency service access request carries at least one of following information: a service quality parameter of the low-latency service in an uplink direction, and a service quality parameter of the low-latency service in a downlink direction.

In some exemplary implementations, the low-latency service access information includes at least one of:
category information of the low-latency service, wherein the category information is used for indicating that a service requesting access is the low-latency service;
access category information of the low-latency service; and
a traffic identifier of the low-latency service.

In some exemplary implementations, entry to the first contention period is indicated by a preset period category identifier.

The embodiments also provide a service access apparatus. The service access apparatus is configured to implement the above embodiments and the exemplary implementations, and the content that has been described will not be repeated. The term "module", as used below, can implement a combination of software and/or hardware having predetermined functions. While the service access apparatus described in the following embodiments is preferably implemented in software, implementation in hardware, or a combination of software and hardware, is also possible and conceivable.

Fig. 4 is a structural block diagram of a service access apparatus according to some embodiments of the present disclosure. As shown in Fig. 4, the service access apparatus includes:
a first obtaining module 42, configured to obtain a low-latency service access request or low-latency service access information of a station; and
an entry module, 44 configured to enter a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

By means of the above modules, since a period dedicated for the low-latency service to participate in contention is specifically configured for the low-latency service, transmission requirements of the low-latency service may be ensured, the problem that transmission requirements of a low-latency service may not be satisfied in the related art is solved, and efficiency of transmission of the low-latency service is improved.

In some exemplary implementations, the low-latency service access request carries at least one of following information: a service quality parameter of the low-latency service in an uplink direction, and a service quality parameter of the low-latency service in a downlink direction.

In some exemplary implementations, the low-latency service access information includes at least one of:
category information of the low-latency service, wherein the category information is used for indicating that a service requesting access is the low-latency service;
access category information of the low-latency service; and
a traffic identifier of the low-latency service.

In some exemplary implementations, entry to the first contention period is indicated by a preset period category identifier.

In some exemplary implementations, the service access apparatus may further include: a first sending module, configured to send low-latency service access operation mode configuration information to the station, wherein the low-latency service access operation mode configuration information is used for instructing the station to enter the low-latency service access operation mode.

In some exemplary implementations, the service access apparatus may further include: a second sending module, configured to send a beacon, wherein parameter information of the first contention period is indicated in the beacon, and the parameter information includes: the number of at least one first contention period in a beacon interval, start time of each first contention period, and end time of each first contention period.

In some exemplary implementations, the service access apparatus may further include: a second obtaining module, configured to obtain a transmission opportunity period, and determine the transmission opportunity period as the first contention period.

In some exemplary implementations, the entry module 44 is further configured to reject the low-latency service access request of the station, and not to enter the low-latency service access operation mode.

In some exemplary implementations, at least one second contention period is further configured in the low-latency service access operation mode, where the first contention period and the second contention period are different periods, the second contention period is dedicated for channel access of data of a non-low-latency service of the station, and the non-low-latency service is a service satisfying a preset non-low-latency service condition; or in the second contention period, channel access of data of the low-latency service of the station and data of the non-low-latency service of the station is permitted.

In some exemplary implementations, the number of the at least one first contention period and/or a length of time of the first contention period are/is determined according to a service quality parameter of the low-latency service and a channel environment indicator; and/or the number of the at least one second contention period and/or a length of time of the second contention period are/is determined according to a service quality parameter of the low-latency service and a channel environment indicator.

In some exemplary implementations, the operation of entering the low-latency service access operation mode includes one of:
entering the low-latency service access operation mode according to pre-configured start time of the low-latency service access operation mode; or
entering the low-latency service access operation mode under a condition that a service of the station is the low-latency service; or
receiving management information used for instructing to enter the low-latency service access operation mode, and entering the low-latency service access operation mode in response to the management information; or
receiving an access request sent by the station and used for instructing the access point to enter the low-latency service access operation mode, and entering the low-latency service access operation mode in response to the access request.

The service access apparatus may further include: a setting module, configured to set a category identifier for a queue in which data of the low-latency service is located, wherein the category identifier of the queue in which data of the service satisfying the preset low-latency service condition is located is set as a low-latency category identifier.

The embodiments also provide a service access apparatus. The service access apparatus is configured to implement the above embodiments and the exemplary implementations, and the content that has been described will not be repeated. The term "module", as used below, can implement a combination of software and/or hardware having predetermined functions. While the service access apparatus described in the following embodiments is preferably implemented in software, implementation in hardware, or a combination of software and hardware is also possible and conceivable.

Fig. 5 is a structural block diagram of another service access apparatus according to some embodiments of the present disclosure. As shown in Fig. 5, the service access apparatus includes:
a first reception module 51, configured to receive low-latency service access operation mode configuration information, wherein a low-latency service is a service satisfying a preset low-latency service condition; and
an entry module 53, configured to enter a low-latency service access operation mode, wherein at least one first contention period is configured in the low-latency service access operation mode, and the first contention period is dedicated for data of a low-latency service, that is permitted to access an access point, of the station to participate in channel contention for channel access.

By means of the above modules, since a period dedicated for the low-latency service to participate in contention is specifically configured for the low-latency service, transmission requirements of the low-latency service may be ensured, the problem that transmission requirements of a low-latency service may not be satisfied in the related art is solved, and efficiency of transmission of the low-latency service is improved.

In some exemplary implementations, the service access apparatus may further include: a sending module, configured to send a low-latency service access request or low-latency service access information to the access point, wherein the low-latency service access request or the low-latency service access information is used for requesting or instructing the access point to enter the low-latency service access operation mode; and receive feedback information that is sent by the access point and indicates permission of the channel access of the data of the low-latency service of the station.

In some exemplary implementations, at least one second contention period is further configured in the low-latency service access operation mode, where the second contention period is dedicated for channel access of data of a non-low-latency service of the station by the access point, and the non-low-latency service is a service satisfying a preset non-low-latency service condition; or
at least one second contention period is further configured in the low-latency service access operation mode, where in the second contention period, channel access of data of the low-latency service of the station and data of the non-low-latency service of the station is permitted by the access point, and the non-low-latency service is a service satisfying a preset non-low-latency service condition.

In some exemplary implementations, the service access apparatus may further include: a second reception module, configured to receive a beacon sent by the access point, wherein parameter information of the first contention period is indicated in the beacon, and the parameter information includes: the number of at least one first contention period in a beacon interval, start time of each first contention period, and end time of each first contention period.

In some exemplary implementations, the low-latency service access request carries at least one of following information: a service quality parameter of the low-latency service in an uplink direction, and a service quality parameter of the low-latency service in a downlink direction.

In some exemplary implementations, the low-latency service access information includes at least one of:
category information of the low-latency service, wherein the category information is used for indicating that a service requesting access is the low-latency service;
access category information of the low-latency service; and
a traffic identifier of the low-latency service.

In some exemplary implementations, entry to the first contention period is indicated by a preset period category identifier.

It should be noted that the various modules described above can be implemented in software or hardware, and implementation in hardware can be implemented in a way as follows but is not limited to the way: the modules described above are located in the same processor, or the modules described above are separately located in different processors in any combination form.

The embodiments also provide a service access system. The service access system includes: an access point and a station, where the station sends a low-latency service access request or low-latency service access information to the access point; and the access point receives the low-latency service access request or the low-latency service access information sent by the station, and enters a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

Reference can be made to the examples described in the above embodiments and exemplary implementations for specific examples in the embodiments, which are not repeated in detail herein.

From the description of the above embodiments, it will be apparent to those having ordinary skill in the art that the service access methods according to the above embodiments can be implemented by means of software plus a necessary general-purpose hardware platform, and of course can also be implemented by means of hardware, but in many cases the former is a better implementation. With such understanding, the technical solution of the present disclosure, in essence or from the view of part contributing to the related art, can be embodied in the form of a software product, where the computer software product is stored in a memory medium (such as read only memory (ROM)/random access memory (RAM), a magnetic disk and an optical disk) and includes a plurality of instructions configured to make a terminal apparatus (which can be a mobile phone, a computer, a server, a network apparatus, etc.) execute the service access method in each of the embodiments of the present disclosure.

### Exemplary implementation

The technical solution of the above embodiments is further explained below with a low-latency service as an example.

The embodiment provides a low-latency service access based coordinated transmission mechanism, which differently performs access of a low-latency service and a common broadband service based on a controllable enhanced distributed channel access method, thereby ensuring access requirements of the low-latency service while supporting access of the common broadband service having low latency requirements.

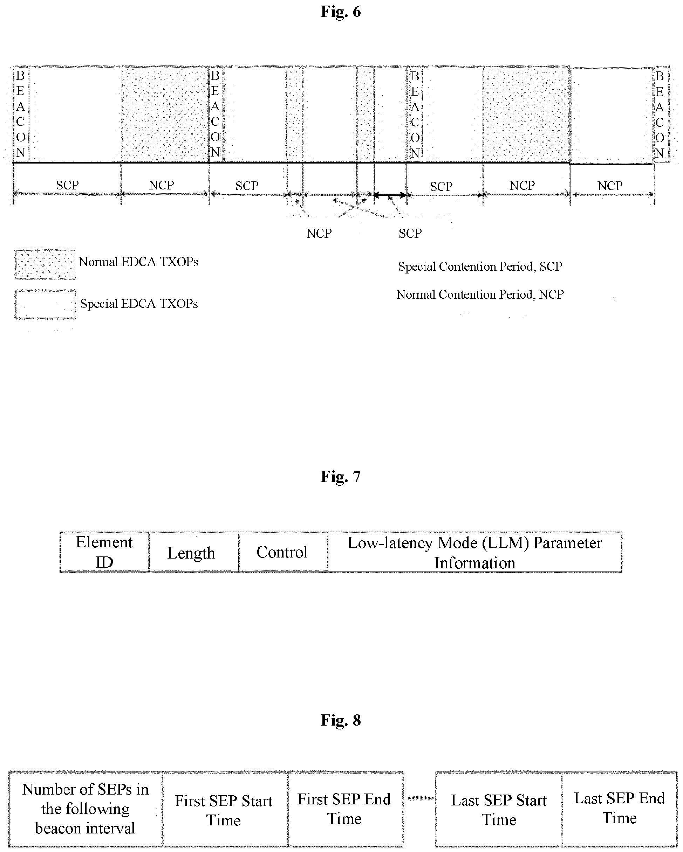

Fig. 6 is a schematic diagram of division of special contention periods (SCPs) and normal contention period (NCPs) according to some exemplary implementations of the present disclosure. As shown in Fig. 6, the service access method of the embodiments mainly includes use of a low-latency service access operation mode and division of channel access time into SCPs (Special Contention Periods, or referred to as low-latency service access periods) and NCPs (Normal Contention Periods). In the SCP, access of specific service data is strictly controlled, and the SCP is dedicated for data of specific services and/or control management data to participate in contention of a channel access opportunity. For example, the SCP may be focused on supporting access of low-latency services, and prohibiting access of other categories of services (e.g., non-low-latency services). For example, the NCP may permit various categories of service data to access, and support the common broadband service to obtain a transmission channel access opportunity; or may be focused on supporting access of the non-low-latency service such as the common broadband service.

In some exemplary implementations, according to quality of service (QoS) requirements, such as an access bandwidth and a latency indicator, for the low-latency service, and current communication channel environmental conditions, a length of time and/or the number of the SCPs and the NCPs may be distributed in a coordinated manner to ensure the QoS requirements for the low-latency service, and simultaneously make the best of supporting access of the non-low-latency service such as the normal broadband service. Whether in the SCP or in the NCP, for an AP or a non-AP STA supporting orthogonal frequency-division multiple access (OFDMA) and multiple input multiple output (MIMO), the AP permits to use an uplink and downlink OFDMA or MIMO mode to achieve multi-user or multi-station access by obtaining a transmission opportunity by means of contention.

In some exemplary implementations, the low-latency service access operation mode is a special operation mode in which data transmission of the low-latency service permitted to access an AP according to the QoS requirements such as a latency indicator is preferentially and strictly ensured in an existing network environment, and in the low-latency service access operation mode, access of the non-low-latency service may be affected.

In some exemplary implementations, entry to a low-latency service access operation mode includes several methods: during setup of a basic service set (BSS), an AP and an associated STA entering the low-latency service access operation mode according to a pre-configuration; or at a running phase after setup of the BSS, a non-AP STA initiating a low-latency service access request, and an AP accepting the low-latency service access request, to enter the low-latency service access operation mode; or an AP receiving related management information into the low-latency service access operation mode; or data of an access category (AC) in which a low-latency service is located performing triggering to enter the low-latency service access operation mode.

In some exemplary implementations, in the SCP, the AP strictly controls access of service data of a specific station, a specific AC, and a specific direction (e.g., an uplink direction, a downlink direction, a direct connection direction, or a bidirectional direction), and the SCP is dedicated for transmission of data of a low-latency service, that is pre-configured by the AP and is permitted to access the AP. For example, before entry to the SCP, data of the low-latency service permitted to access the AP is pre-configured. The AP not only configures enhanced distributed channel access (EDCA) parameters of each AC of each access STA, but also permits sending mode control of service data sending in a related direction of each AC of the STA, and for data of a certain AC of a certain STA, the configured EDCA parameters are utilized to participate in contention of a channel transmission opportunity only in a "permitting sending" mode (which indicates that participation of the channel transmission opportunity is permitted), and sends data after obtaining the transmission opportunity; and access of the non-low-latency service is prohibited. Moreover, transmission power and a quadrature amplitude modulation (QAM) order of the AP and/or the non-AP STA may be correspondingly adjusted according to channel quality conditions, so as to ensure reliable access of the low-latency service.

In some exemplary implementations, in the NCP, the AP configures the EDCA parameters of the related AC in the access STA, each AC participates in contention of the channel transmission opportunity according to the configured EDCA parameters, and sends data after obtaining the transmission opportunity; and the AC of the STA may have admission control, but may also be transmitted in the AC having lower priority without permission control when an access control request of certain service data of that AC is rejected.

In some exemplary implementations, a method for setting up an SCP and an NCP may include any one of:
for example, a mode of adding a low-latency mode element for indication in a beacon. That is, when the AP supports the low-latency service access operation mode, the AP may send the beacon to each station in a broadcast manner, where the low-latency mode element may be added into the beacon. The low-latency mode element may include: an element identifier (ID), a length, and low-latency mode parameter information, where the low-latency mode parameter information indicates the number of the SCPs (or referred to as low-latency service access periods) and/or the NCPs in the beacon interval, and start time and end time of the related SCPs and/or NCPs. An example of the low-latency mode element is as shown in Fig. 7. Fig. 7 is a schematic diagram of a format of a low-latency mode element according to some exemplary implementations of the present disclosure. A schematic diagram of a parameter format of the low-latency mode element is as shown in Fig. 8. Fig. 8 is a schematic diagram of a format of parameters of a low-latency mode element according to some exemplary implementations of the present disclosure.

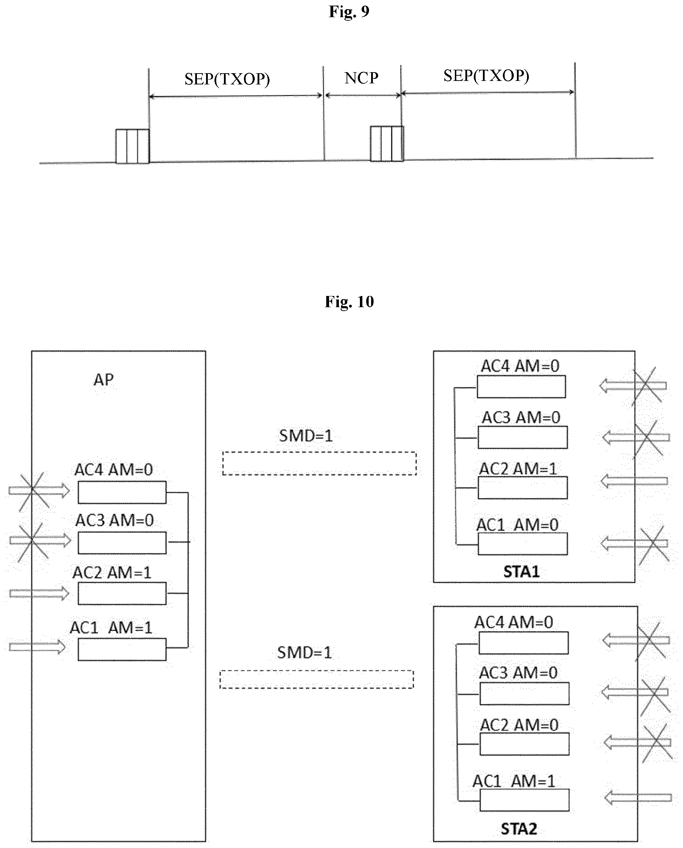

For another example, Fig. 9 is a schematic diagram of transmission opportunity (TXOP) reservation based period setup of a low-latency service access operation mode according to some exemplary implementations of the present disclosure. As shown in Fig. 9, a TXOP may be reserved by an AP as an SCP. That is, the AP obtains a TXOP period as the SEP, and an STA having permission access of a low-latency service flow is permitted to participate in contention, so as to obtain the transmission opportunity for transmission of data of the low-latency service in the TXOP period, and the AP sends low-latency data to the corresponding station in a downlink direction based on a contention mechanism between inner low-latency service flow data queues, and achieves access of low-latency services of the related station in an uplink direction based on a trigger based contention access mechanism. For example, the SEP may further be protected by means of a physical and virtual carrier sense (CS) mechanism, so as to prohibit STAs or service flows that are not permitted to access from participating in contention.

In some exemplary implementations, a low-latency service access operation method and mechanism are illustrated below.

In some exemplary implementations, an AP or a non-AP STA may indicate a current time period category by setting a mark. For example, a mark may be configured for each time period category separately. Different time period categories may be identified by different fields; and different time period categories may also be identified by different numerical values of the same field. For example, a mark may be set, such as a strict admission mode (SMD) mark or a low-latency mode mark, and whether to enter the SCP or the NCP currently is indicated by means of different numerical values of the mark. For example, the mark may be set to 1, which indicates that a current period category is the SCP; and the mark may also be set to 0, which indicates that the current period category is the NCP. For example, the SEP may be protected by means of the physical and virtual CS mechanism, so as to prohibit STAs or services flows that are not permitted to access the AP from participating in contention. For example, the mark may be set by means of a management control frame carrying SMD mark information.

In some exemplary implementations, when a BSS enters the SCP, that is, the AP sets the SMD mark to 1, access of service data of each STA in the BSS is strictly controlled according to the following condition: an access service of the STA is a low-latency service, for example, corresponds to a low-latency identifier, such that data permitted to access the AP may be sent. For example, different access services may be identified by different fields, or different access services may also be identified by different numerical values of the same field. For example, a field admission mark (AM) or a low-latency mark may be preset, and whether the service is a low-latency service or a common service (i.e. normal service) is indicated by means of different numerical values. The AM is a mark of a send queue of the AP and the STA. For example, the AM or the low-latency mark to which the access service corresponds may be set to 1, which indicates that the access service corresponds to a low-latency service; and the AM or the low-latency mark to which the access service corresponds is set to 0, which indicates that the access service corresponds to a non-low-latency service (i.e., common service or normal service). For example, an AC, a related service flow category identifier or a traffic ID (TID) of the access service may be used to determine the low-latency mark of the access service. In some exemplary implementations, the AM may be set independent of an admission control mark (ACM) of existing admission control. That is, the AP may directly set the AM of the related AC, the related service flow, or the TID in the non-AP STA; and the AM may also be set based on the ACM of the existing admission control. For example, an operation when the AM is set based on the ACM of the existing admission control is as follows: when the ACM of the AC of the non-AP STA is 1, the non-AP STA sends a related low-latency service access request to the AP and obtains acceptance by the AP, and the AM is correspondingly set to 1. As shown in Fig. 10, Fig. 10 is a schematic diagram of an operation mechanism of an SCP according to some exemplary implementations of the present disclosure.

When the BSS enters the NCP, that is, the AP does not set an SCP identifier, data access of service data of each STA is not strictly controlled. For example, the SMD mark or the low-latency mode mark of 0 may be used to indicate that the BSS enters the NCP. In an embodiment, in the NCP, one of the following access modes may be supported: operation mechanism I of the NCP, operation mechanism II of the NCP, and operation mechanism III of the NCP. The three mechanisms are further explained below:

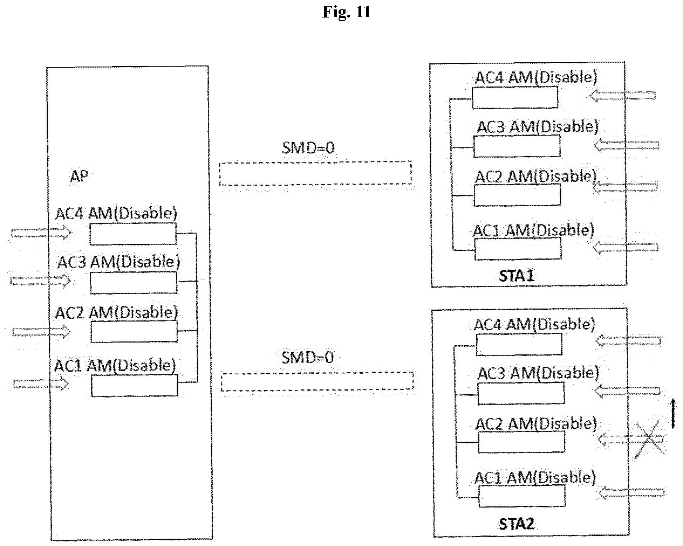

Fig. 11 is a schematic diagram of an operation mechanism I of an NCP according to some exemplary implementations of the present disclosure. As shown in Fig. 11, in operation mechanism I of the NCP, an AM mark fails, and each AC participates in contention of a channel transmission opportunity according to configured EDCA parameters, and sends data after obtaining the transmission opportunity.

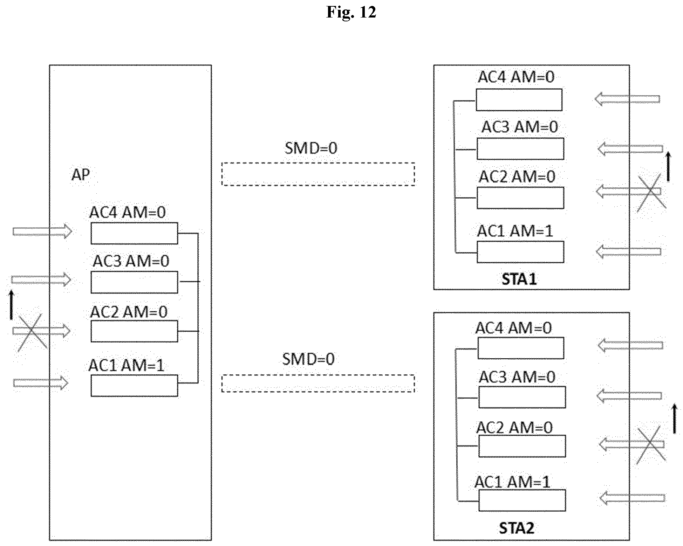

Fig. 12 is a schematic diagram of an operation mechanism II of an NCP according to some exemplary implementations of the present disclosure. As shown in Fig. 12, in operation mechanism II of the NCP, service data having an AC corresponding to AM=0 is permitted to participate in channel contention but may be transmitted by means of an AC having a lower priority than an original AC; and service data having an AC corresponding to AM=1 is also permitted to participate in channel contention:

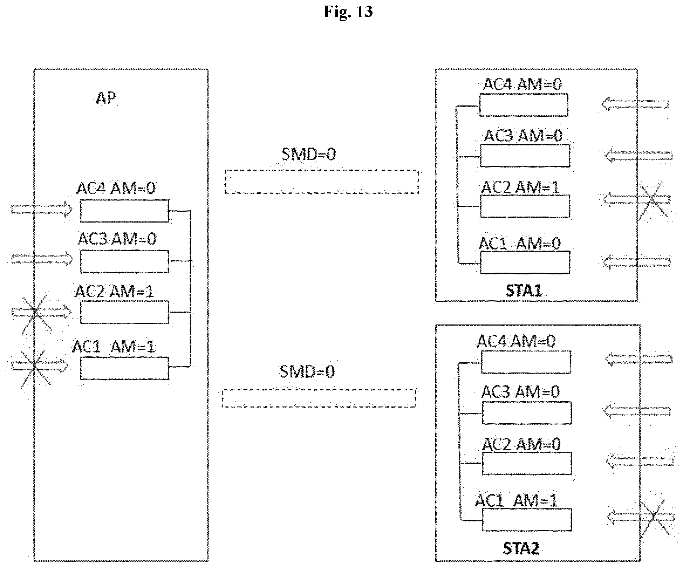

Fig. 13 is a schematic diagram of an operation mechanism III of an NCP according to some exemplary implementations of the present disclosure. As shown in Fig. 13, in operation mechanism III of the NCP, service data having an AC corresponding to AM=1 does not participate in contention of a channel transmission opportunity; and service data having an AC corresponding to AM=0 participates in contention of a channel transmission opportunity according to configured EDCA parameters of the AC.

In some exemplary implementations, an operation mechanism of a low-latency service access operation mode provided in the implementations is illustrated with a continuous SCP and NCP as an example.

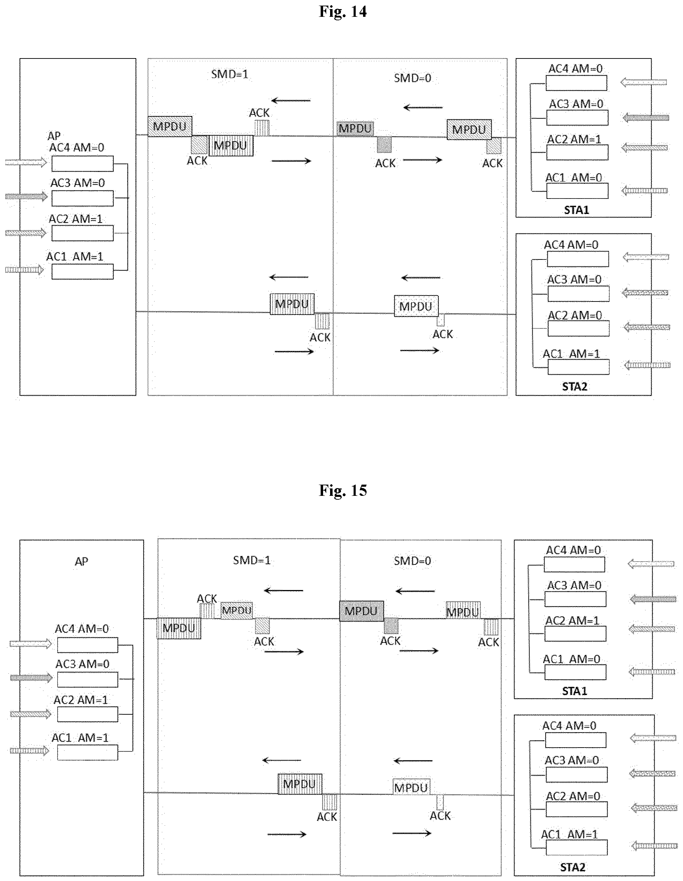

In some exemplary implementations, Example I of an operation mechanism of an AP in a BSS and a non-AP STA in a low-latency service access operation mode is shown in Fig. 14. Fig. 14 is a schematic diagram of an operation mechanism I of a low-latency service access operation mode according to some exemplary implementations of the present disclosure. When SMD=1, service data having an AM=1 mark in the AP and the non-AP STA is permitted to participate in contention of a channel access opportunity; and when SMD=0, service data having an AM=1 mark or AM=0 mark may participate in contention of a channel access opportunity.

In some exemplary implementations, Example II of an operation mechanism of an AP in a BSS and a non-AP STA in a low-latency service access operation mode is shown in Fig. 15. Fig. 15 is a schematic diagram of an operation mechanism II of a low-latency service access operation mode according to some exemplary implementations of the present disclosure. When SMD=1, service data having an AM=1 mark in the AP and the non-AP STA is permitted to participate in contention of a channel access opportunity; and when SMD=0, service data having an AM=0 mark may participate in contention of a channel access opportunity.

The embodiments provide a low-latency service access based coordinated transmission mechanism, which differently performs access of a low-latency service and a common broadband service by means of division of the SCPs and the NCPs based on a controllable enhanced distributed channel access method, thereby ensuring access requirements of the low-latency service, and supporting access of the common broadband service having low-latency requirements.

The embodiments of the present disclosure further provide a computer-readable storage medium. The computer-readable storage medium stores a computer program, where the computer program is configured to execute operations of any one of the above method embodiments at runtime.

In some exemplary embodiments, the above computer-readable storage medium may include, but is not limited to, a universal serial bus flash disk, an ROM, an RAM, a removable hard disk, a magnetic disk, or an optical disk, and various media that may store the computer program.

The embodiments of the present disclosure further provide an electronic device. The electronic device includes a memory and a processor, where a computer program is stored in the memory, and the processor is configured to run the computer program, so as to execute operations of any one of the above method embodiments.

In some exemplary embodiments, the above electronic device may further include a transmission device and an input/output device, where the transmission device is connected to the above processor, and the input/output device is connected to the above processor.

Reference can be made to the examples described in the above embodiments and exemplary implementations for specific examples in this embodiment, which are not repeated in detail herein.

Apparently, those having ordinary skill in the art will appreciate that the modules or operations of the above present disclosure can be achieved with a general-purpose computation apparatus, can be centralized on a single computation apparatus or distributed on a network composed of a plurality of computation apparatuses, and can be achieved with program codes executable by the computation apparatus, such that the modules or operations can be stored in a storage apparatus to be executed by the computation apparatus. Under some conditions, the operations shown or described can be executed in an order different from that herein, or the operations of modules can be fabricated separately as individual integrated circuit modules, or multiple ones of the modules or operations can be fabricated as a single integrated circuit module for implementation. Thus, the present disclosure is not limited to any combination of particular hardware and software.

What is described above is merely the exemplary embodiments of the present disclosure and is not intended to limit the present disclosure. For those having ordinary skill in the art, the present disclosure can be modified and changed in various ways. Any modifications, equivalent substitutions, improvements, etc. within the principles of the present disclosure shall all fall within the scope of protection defined by the appended claims of the present disclosure.

## Claims

1. A service access method, applied to an access point and comprising:
obtaining a low-latency service access request or low-latency service access information of a station; and
entering a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

2. The service access method according to claim 1, wherein the low-latency service access request carries at least one of following information: a service quality parameter of the low-latency service in an uplink direction, and a service quality parameter of the low-latency service in a downlink direction.

3. The service access method according to claim 1, wherein the low-latency service access information comprises at least one of:
category information of the low-latency service, wherein the category information is used for indicating that a service requesting access is the low-latency service;
access category information of the low-latency service; and
a traffic identifier of the low-latency service.

4. The service access method according to claim 1, wherein entry to the first contention period is indicated by a preset period category identifier.

5. The service access method according to claim 1, further comprising:
sending low-latency service access operation mode configuration information to the station, wherein the low-latency service access operation mode configuration information is used for instructing the station to enter the low-latency service access operation mode.

6. The service access method according to claim 1, further comprising:
sending a beacon, wherein parameter information of the first contention period is indicated in the beacon, and the parameter information comprises: the number of at least one first contention period in a beacon interval, start time of each first contention period, and end time of each first contention period.

7. The service access method according to claim 1, further comprising:
obtaining a transmission opportunity period, and determining the transmission opportunity period as the first contention period.

8. The service access method according to claim 1, further comprising:
rejecting the low-latency service access request of the station, and not entering the low-latency service access operation mode.

9. The service access method according to any one of claims 1-8, wherein
at least one second contention period is further configured in the low-latency service access operation mode, wherein the first contention period and the second contention period are different periods, the second contention period is dedicated for channel access of data of a non-low-latency service of the station, and the non-low-latency service is a service satisfying a preset non-low-latency service condition; or in the second contention period, channel access of data of the low-latency service of the station and data of the non-low-latency service of the station is permitted.

10. The service access method according to claim 9, wherein the number of the at least one first contention period and/or a length of time of the first contention period are/is determined according to a service quality parameter of the low-latency service and a channel environment indicator; and/or the number of the at least one second contention period and/or a length of time of the second contention period are/is determined according to a service quality parameter of the low-latency service and a channel environment indicator.

11. The service access method according to any one of claims 1-8, wherein entering the low-latency service access operation mode comprises one of:
entering the low-latency service access operation mode according to pre-configured start time of the low-latency service access operation mode; or
entering the low-latency service access operation mode under a condition that a service of the station is the low-latency service; or
receiving management information used for instructing to enter the low-latency service access operation mode, and entering the low-latency service access operation mode in response to the management information; or
receiving an access request sent by the station and used for instructing the access point to enter the low-latency service access operation mode, and entering the low-latency service access operation mode in response to the access request.

12. The service access method according to any one of claims 1-8, further comprising:
setting a category identifier for a queue in which data of the low-latency service is located, wherein the category identifier of the queue in which data of the service satisfying the preset low-latency service condition is located is set as a low-latency category identifier.

13. A service access method, applied to a station and comprising:
receiving low-latency service access operation mode configuration information, wherein the low-latency service is a service satisfying a preset low-latency service condition; and
entering a low-latency service access operation mode, wherein at least one first contention period is configured in the low-latency service access operation mode, and the first contention period is dedicated for data of a low-latency service, that is permitted to access an access point, of the station to participate in channel contention for channel access.

14. The service access method according to claim 13, further comprising:
sending a low-latency service access request or low-latency service access information to the access point, wherein the low-latency service access request or the low-latency service access information is used for requesting or instructing the access point to enter the low-latency service access operation mode; and
receiving feedback information that is sent by the access point and indicates permission of the channel access of the data of the low-latency service of the station.

15. The service access method according to claim 13, wherein
at least one second contention period is further configured in the low-latency service access operation mode, wherein the second contention period is dedicated for channel access of data of a non-low-latency service of the station by the access point, and the non-low-latency service is a service satisfying a preset non-low-latency service condition; or
at least one second contention period is further configured in the low-latency service access operation mode, wherein in the second contention period, channel access of data of the low-latency service of the station and data of the non-low-latency service of the station is permitted by the access point, and the non-low-latency service is a service satisfying a preset non-low-latency service condition.

16. The service access method according to claim 13, further comprising:
receiving a beacon sent by the access point, wherein parameter information of the first contention period is indicated in the beacon, and the parameter information comprises: the number of at least one first contention period in a beacon interval, start time of each first contention period, and end time of each first contention period.

17. A service access apparatus, comprising:
a first obtaining module, configured to obtain a low-latency service access request or low-latency service access information of a station; and
an entry module, configured to enter a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

18. A service access apparatus, comprising:
a reception module, configured to receive low-latency service access operation mode configuration information, wherein a low-latency service is a service satisfying a preset low-latency service condition; and
an entry module, configured to enter a low-latency service access operation mode, wherein at least one first contention period is configured in the low-latency service access operation mode, and the first contention period is dedicated for data of a low-latency service, that is permitted to access an access point, of the station to participate in channel contention for channel access.

19. A service access system, comprising:
an access point and a station, wherein the station sends a low-latency service access request or low-latency service access information to the access point; and
the access point receives the low-latency service access request or the low-latency service access information sent by the station, and enters a low-latency service access operation mode, wherein at least one first contention period is configured in the low-latency service access operation mode, the first contention period is dedicated for channel access of data of a low-latency service of the station, and the low-latency service is a service satisfying a preset low-latency service condition.

20. A computer-readable storage medium storing a computer program, wherein the computer program is configured to execute the service access method of any one of claims 1-12 or to execute the method of any one of claims 13-16 at runtime.

21. An electronic device, comprising a memory and a processor, wherein a computer program is stored in the memory, and the processor is configured to run the computer program, so as to execute the service access method of any one of claims 1-12, or so as to execute the method of any one of claims 13-16.
